# EUROPEAN PATENT SPECIFICATION

(11) **EP 3 736 455 B1**
(45) Date of publication and mention of the grant of the patent: **13.04.2022**
(21) Application number: 20170781.7
(22) Date of filing: 22.04.2020
(51) Int. Cl.: F16B 5/12, F16B 21/08, F16B 21/07, E04B 9/04, E04B 9/26, F16B 5/06, F16B 2/04, E04F 13/08, E04B 9/18

(54) **DEVICE AND KIT FOR FIXING PANELS TO A STRUCTURE**
VORRICHTUNG UND BAUSATZ ZUR BEFESTIGUNG VON PLATTEN AN EINER STRUKTUR
DISPOSITIF ET KIT POUR FIXER DES PANNEAUX SUR UNE STRUCTURE

(30) Priority: 08.05.2019 IT 201900006630
(43) Date of publication of application: 11.11.2020
(73) Proprietor: Volpato Daniele, 30033 Noale, Venezia (IT)
(72) Inventor: VOLPATO, Daniele, I-30033 Noale, Venezia (IT)
(74) Representative: Busana, Omar

(56) References cited:
- EP-A2- 1 783 289
- AU-A1- 2015 324 347
- DE-A1- 19 519 014
- GB-A- 2 332 004
- IT-A1- FR20 090 019
- US-B2- 7 017 239

## Description

### FIELD OF APPLICATION

The present invention relates to a device and to a kit for fixing panels to a structure. In particular, the present invention relates to a device and to a relative kit for fixing panels to a structure in the marine industry.

### PRIOR ART

As is known, false ceilings are widely used and are generally formed by means of a planar surface having a lightweight structure arranged beneath a ceiling, commonly referred to as structural supports.

In general, the false ceiling is formed for aesthetic reasons in order to cover a ceiling with thermally insulating, sound-absorbing and/or fire-resistant material.

The compartment that is created above the structural support may be used to house a ventilation system, electrical connection cables, etc.

There are two main false ceiling categories: fixed false ceilings and removable false ceilings. The present invention relates in particular to removable false ceilings.

There are several types of devices in the prior art that are used to fix the panels that make up the false ceiling to the ceiling.

In particular, one of these devices comprises press studs, which may be made of a rigid polymeric material.

A first stud portion is fixed to a panel and a second stud portion is fixed directly or indirectly to the ceiling. In order to complete the fixing process, it is necessary to press the two portions against one another such that one portion becomes interlocked in the other following temporary deformation.

In order to detach the panel from the ceiling, it is necessary to forcibly pull it such that the two portions uncouple from one another.

Although the devices of the prior art are widely used and appreciated, they are not devoid of drawbacks.

First of all, the devices of the prior art comprise a high number of components, for example seven. The devices therefore have to be assembled - a procedure that requires time and precision.

Once again, when the device is sold pre-assembled, the initial mounting procedure costs time and resources.

In addition, with regard to the step of fixing the device to the panel or to the ceiling structure, it is not possible to accurately position the panel in a simple manner. For example, in the case of a plurality of adjacent panels, the systems of the prior art do not make it possible to stably position one panel on another. As a result of stress, the panels may lose their alignment, making the misalignment visible.

A device of the prior art is shown in DE 195 19 014 A1.

### PRESENTATION OF THE INVENTION

The object of the present invention is therefore to solve at least some of the drawbacks and limitations cited with reference to the prior art.

A first task of the present invention is that of providing a device for fixing a panel to a ceiling that is more functional than the devices of the prior art, in particular during the steps of positioning and fixing the component that is to be mounted to the structure and the component to be mounted to the panel.

A second task of the present invention is that of providing a device for fixing a panel to a structure, in which, during the pre-mounting step, the system may serve as a shim without being fixed to the ceiling structure or to the panel by means of the screws.

Another task is that of providing a fixing device composed of a limited number of pieces, which therefore makes it possible to achieve an advantage in terms of assembly time and cost.

The object is achieved by a device for fixing panels to a structure as per claim 1, and by a not claimed relative assembly kit for fixing a panel to a structure.

### DESCRIPTION OF THE DRAWINGS

Additional features and the advantages of the present invention will become clearer from the following description of preferred and non-limiting embodiments thereof, in which:
- Fig. 1 is a schematic exploded view of a device for fixing panels to a structure according to the present invention;
- Fig. 2 is a schematic perspective view of a device for fixing panels to a structure as per the present invention in disassembled states;

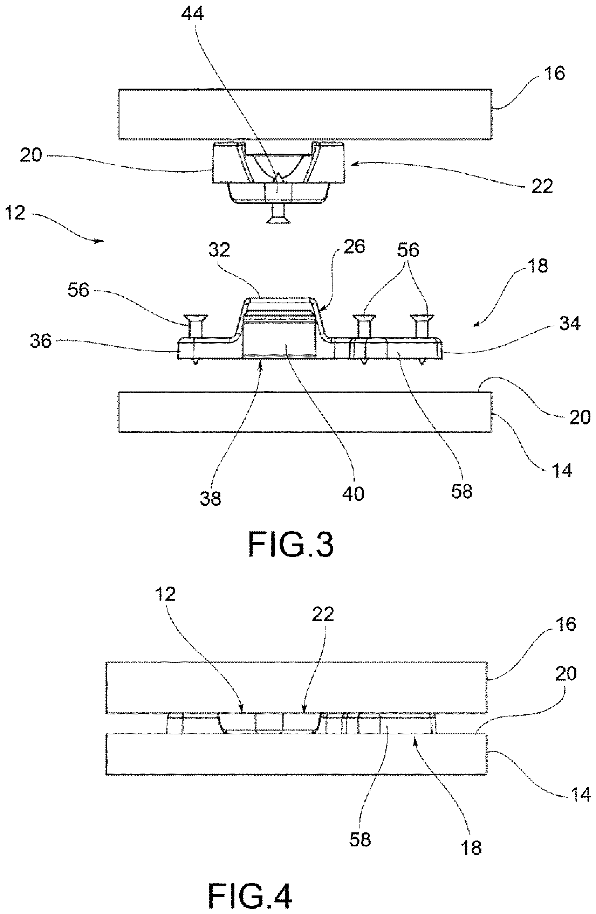

- Fig. 3 is a schematic front view of a device for fixing panels to a structure according to the present invention in disassembled states;
- Fig. 4 is a schematic front view of a device for fixing panels to a structure as per the present invention in assembled states;
- Fig. 5 is a schematic perspective view of a component of the device for fixing panels to a structure as per the present invention;
- Fig. 6 is a schematic perspective view of a component of the device for fixing panels to a structure as per the present invention;
- Fig. 7 is a schematic perspective view of a component of the device for fixing panels to a structure as per the present invention;
- Fig. 8 is a schematic plan view of a component of the device for fixing panels to a structure as per the present invention;
- Fig. 9 is a schematic view of a cross section of a component of the device for fixing panels to a structure as per the present invention;
- Fig. 10 is a schematic view of a possible use of a device for fixing panels to a structure according to the present invention;
- Fig. 11 is a schematic exploded view of an alternative embodiment of a device for fixing panels to a structure as per the present invention;
- Fig. 12 is a schematic view of an alternative embodiment of a device for fixing panels to a structure as per the present invention in an assembled configuration; and
- Fig. 13 and 14 are schematic views of two possible not claimed embodiments of a device assembled by means of a kit.

The elements or parts of elements that the embodiments described in the following have in common will be indicated by the same reference numerals.

### DETAILED DESCRIPTION

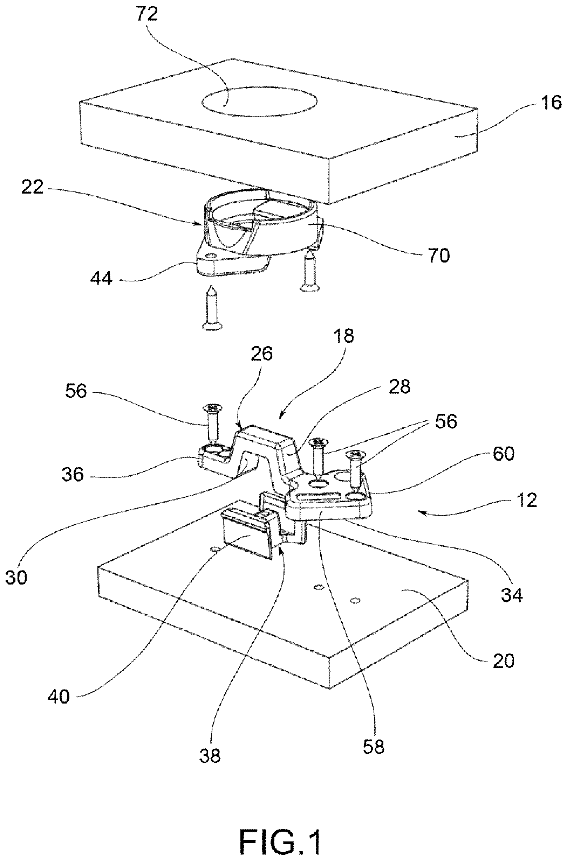

In Fig. 1, reference numeral 12 indicates a device for fixing a panel 14 to a structure 16.

The device comprises a first element 18 adapted to be arranged on a surface 20 of the panel 14, and a second element 22 adapted to be arranged on a structure 16.

The first element 18 comprises a substantially U-shaped body 26, which is provided with two arms 28, 30 and a connecting portion 32. On each arm 28, 30, a fixing foot 34, 36 is provided for fixing it to the panel 14.

The first element 18 also comprises retention means 38 comprising two locking wings 40, 42, which may resiliently move closer to one another. The retention means 38 may be arranged astride said body 26 so as to protrude by means of the locking wings 40, 42 in a transverse direction with respect to the body 26.

During use, the retention means 38 are essentially arranged between the connecting portion 32 and the surface 20 of the panel 14 so as to laterally protrude from the connecting portion 32.

Therefore, the first element 18 is composed of two separate elements, a body 26 and retention means 38, which are coupled to one another by fixing the body 26 to the surface 20 of the panel 14.

The second element 22 comprises an insertion portion 70 adapted to be inserted, at least in part, into a hole 72 provided in said structure 16, and comprises locking means adapted to block at least the removal of the second element 22 from the hole 72.

Furthermore, the second element 22 comprises a shaped seat 46 for said first element 18.

The shaped seat 46 may contain the connecting portion 32 of the body 26, at least in part. Furthermore, the shaped seat 46 comprises abutment surfaces 48, 50 for said locking wings 40, 42.

As may be seen in the embodiments shown in the attached drawings, the shaped seat is adapted to contain also the locking wings 40, 42, at least in part.

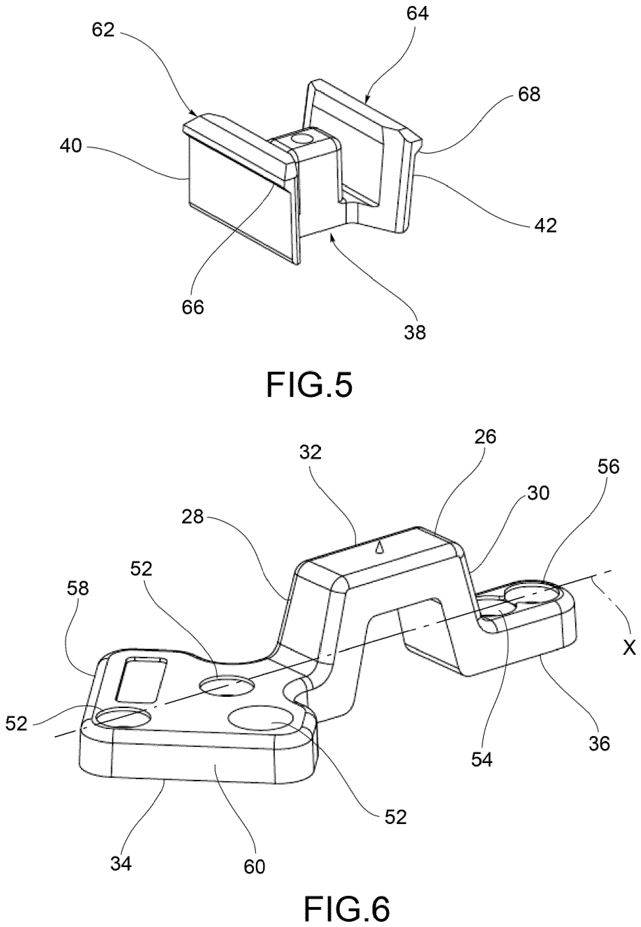

In accordance with one embodiment of the body 26 of the first element 18, which is shown in Fig. 6, the fixing feet 34, 36 comprise at least one hole 52, 54, adapted to allow for the fixing with screws 56, in order to fix the fixing foot 34, 36 to the surface 20 of the panel 14.

In the embodiment shown in Fig. 6, a first fixing foot comprises three holes 52, while the second fixing foot comprises two holes 54.

At least one of the fixing feet 34, 36 may be shaped to increase the surface that rests against the panel 14.

In this regard, the embodiment shown in Fig. 6 shows a body 26 provided with a shaped fixing foot 34.

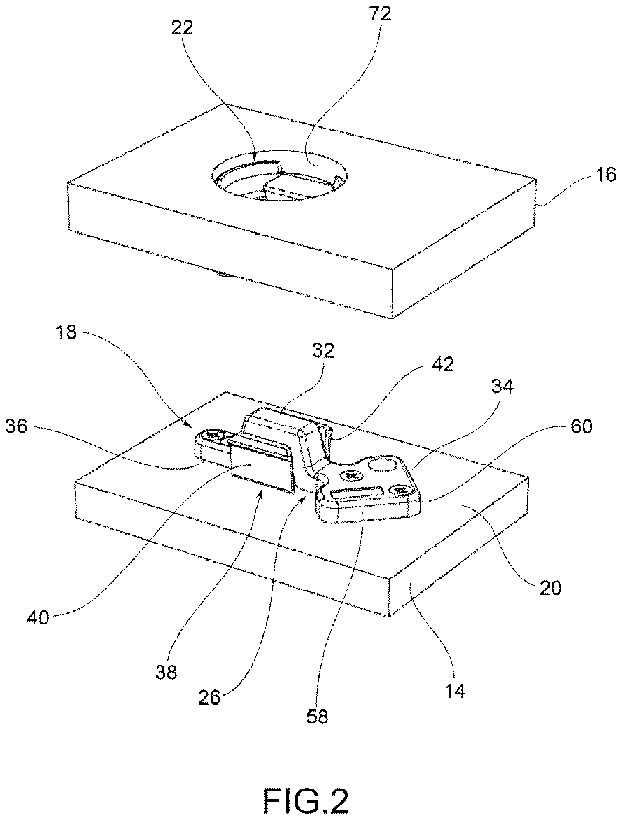

In particular, according to a possible embodiment, at least one of the fixing feet 34, 36 is symmetrical with respect to a longitudinal axis x of the body 26 and has two lateral surfaces 58, 60 arranged at 90° to one another. Advantageously, as may be seen in Fig. 2 for example, the lateral surfaces 58, 60 may be substantially perpendicular to the supporting position of the body 26.

In accordance with a possible embodiment, the locking wings 40, 42 comprise an end portion 62, 64 that protrudes towards the outside of the locking wings 40, 42 so as to define a stop 66, 68 that may cooperate with the abutment surfaces 48, 50 of the shaped seat 46.

In other words, once the retention means 38 have been inserted into the shaped seat 46, the locking wings 40, 42 move closer to one another and slide on the inner abutment surfaces 48, 50 of said seat. Once the stops 66, 68 pass the abutment surfaces 48, 50, the locking wings 40, 42 tend to open towards their non-deformed position. In this way, the stops 48, 50 that protrude outwards from the locking wings 40, 42 prevent the removal of the retention means 38, and therefore of the first element 18, from the second element 22.

In accordance with a possible embodiment, the coupling between the shaped seat 46 and retention means 38 may prevent the first element 18 and the second element 22 from rotating relative to one another, at least in part.

In accordance with a possible embodiment of the present invention, the end portions 62, 64 may form a slope that may facilitate the insertion of the retention means 38 into the shaped seat 46.

The second element 22 may comprise an insertion portion 70 adapted to be inserted, at least in part, into a hole 72 made in said structure 16.

Advantageously, the insertion portion 70 may comprise a substantially cylindrical outer surface, the diameter of which may be between 20 mm and 70 mm.

Advantageously, the substantially cylindrical insertion portion 70 may be inserted into the hole 72 having suitable dimensions for this purpose.

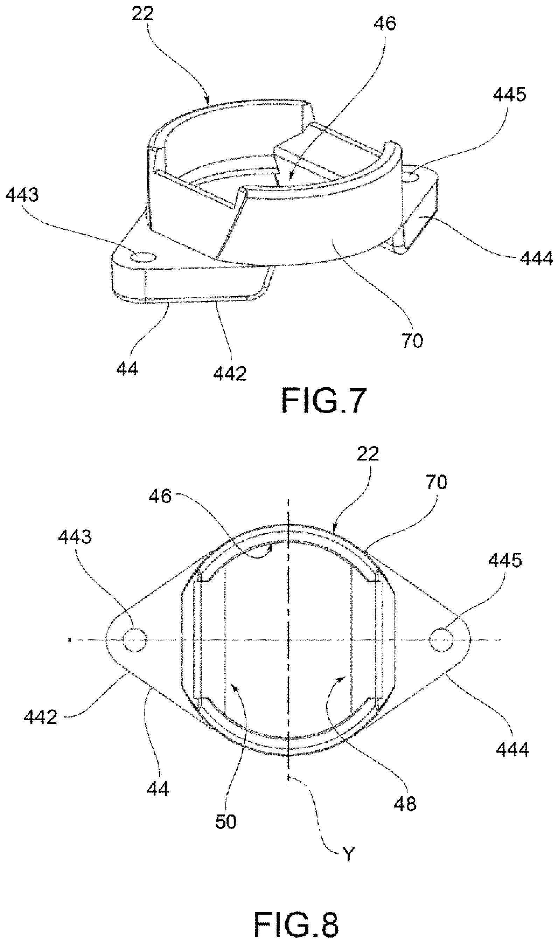

In accordance with a first embodiment of the present invention shown in Fig. 7 and 8, for example, the locking means may comprise a fixing collar 44 for fixing the second element 22 to the structure 16. The fixing collar 44 may be provided with two flaps 442, 444 that protrude from the insertion portion 70, preferably in diametrically opposing directions. A hole 443, 445 may be made in each of the two flaps 442, 444 for fixing the second element 22 to the structure 16 by means of screws.

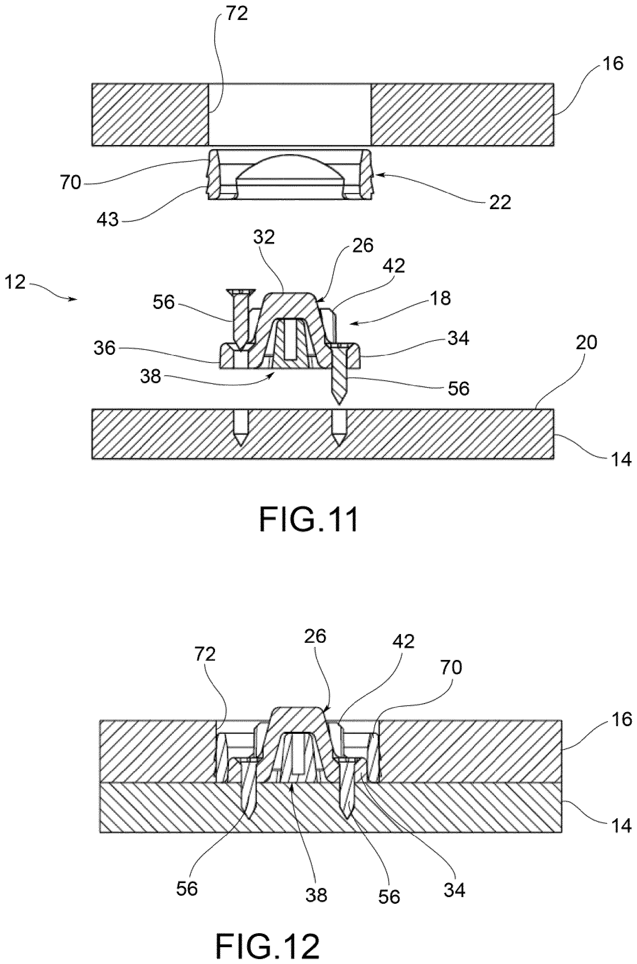

In an alternative embodiment shown in Fig. 11 and 12, for example, the fixing means comprise at least one side prominence 43 arranged on the outer surface of the insertion portion 70. There may be two side prominences 43, for example, as shown in the example in Fig. 11.

The side prominences 43 protruding from the outer surface of the insertion portion 70 create interference between the insertion portion 70 and the respective hole 72 so as to oppose the removal of the insertion portion 70 from the particular hole 72.

In accordance with a possible embodiment, the shaped seat 46 may be substantially cylindrical, in which the abutment surfaces 48, 50 are opposite one another with respect to a transverse plane (y). Advantageously, the abutment surfaces 48, 50 may define an internal narrowing 74, 76 for the shaped seat 46.

In accordance with a possible embodiment, the cross section of the shaped seat 46 comprises a substantially circular portion having two substantially rectilinear portions that are arranged substantially in parallel with one another, corresponding to the abutment surfaces 48, 50.

In accordance with one embodiment, the body 26, the retention means 38 and the second element 22 may be made of metal or polymeric material.

In accordance with a possible embodiment of the present invention, the height of the connecting portion 32 with respect to the supporting surface of the fixing feet 34, 36 may be between 6 mm and 40 mm.

In accordance with a possible embodiment of the present invention, the hole 72 may have a diameter of between 30 mm and 50 mm, preferably around 40 mm. The diameter of the outer surface of the insertion portion 70 may be between 30 mm and 50 mm, preferably around 39.5 mm.

The height of the insertion portion 70 intended to enter the structure 16 may be between 10 mm and 16 mm, preferably around 13 mm.

Fig. 11 and 12 show an alternative embodiment of the device 12. In this case, the second element 22 is provided with the prominences 43, and therefore, once inserted into the corresponding hole 72 made in the structure 16, the second element 22 does not protrude from the surface of the structure 16. Furthermore, the first element 18 may be provided with a body 20 that may be inserted into the shaped seat 46 such that, in assembled states, the surfaces of the panel 14 and of the structure 16 may be brought closer together and possibly so that they touch.

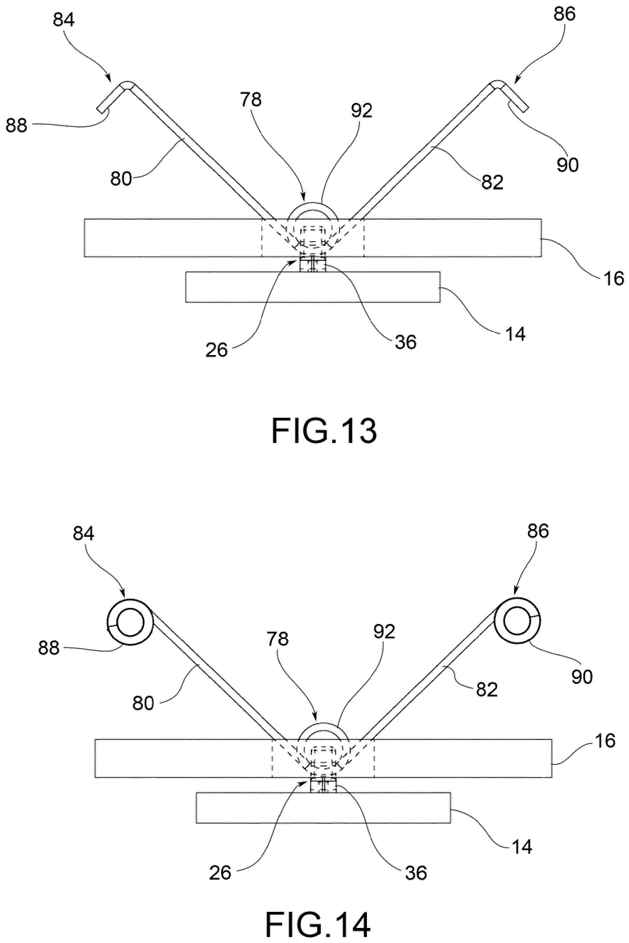

Figures 13 and 14 show a not claimed assembly kit for fixing a panel 14 to a structure 16, comprising a device 12 for fixing a panel 14 to a structure 16 of the above-described type.

The kit also comprises second fixing means 78 adapted to be coupled to the body 26 of the first element 18 in place of the retention means 18. In particular, the second fixing means 78 are provided with two divergent legs 80, 82 provided with attachment means 88, 90 at a distal end 84, 86, which protrude outwards from the legs 80, 82.

The legs 80, 82 may assume at least two configurations:
- a first configuration in which they are spaced apart from one another; and
- a second configuration in which they are closer to one another than in the first configuration.

The legs 80, 82 are connected to one another by means of a spring 92.

Advantageously, the legs 80, 82 may be the extension of the ends of the spring 82. The spring 82 is adapted to move the legs 80, 82 from the second configuration back to the first configuration.

In accordance with a possible not claimed embodiment, the connecting portion 32 may be inserted into the spring 92 of the second fixing means 78.

Advantageously, the spring 92 may be formed with a number of coils between 2 and 6.

Advantageously, the attachment means 88, 90 may be made by a bend towards the outside of the wire from which the legs 80, 82 are made.

In accordance with a possible not claimed embodiment the attachment means 88, 90 are inclined with respect to the particular leg by approximately 90°.

In accordance with a possible not claimed embodiment, the attachment means 88, 90 may be at least one coil that forms a substantially circular element.

In accordance with a possible not claimed embodiment, the legs 80, 82 may have a length of between 8 and 12 cm, preferably around 10 cm.

In this case, a not claimed method for providing a panel 14 on a ceiling 16 comprises the steps of:
- providing a kit for fixing a panel 14 to a structure 16;
- inserting the body 22 into the spring 92,
- moving the legs 80, 82 into the second configuration, in which they are closer to one another than in the first configuration;
- inserting the legs 80, 82 into a hole 72 in the structure 16;
- releasing the legs 80, 82 such that they are wider than in the second configuration.

Furthermore, the method may provide detaching the panel, comprising the following steps:
- pulling the panel 14 so as to move it away from the structure 16 such that the attachment means 88, 90 come to stop on the inner surface of the hole 72 in the structure 16;
- moving the legs 80, 82 into the second configuration in which they are closer to one another than in the first configuration;
- removing the legs 80, 82 from the hole 72 in the structure 16; and
- releasing the legs 80, 82 such that they are wider than in the second configuration.

In accordance with a possible embodiment of the method, between the step in which the panel 14 is pulled so as to move it away from the structure 16 and the step in which the legs 80, 82 are moved into the second configuration, a step of rotating the panel 14 may be provided.

The advantages are therefore now obvious that may be achieved with the device of the present invention.

First of all, it is possible to repeatedly and safely remove cover panels from a ceiling, even in the marine industry.

In particular, the device makes it possible to fix the panels more quickly so as to guarantee the alignment between the panels and between the panel and other structures in a simple manner.

In fact, the structure of the device renders said device suitable for fixing panels to other panels or a ceiling structure.

The body 26 may be used to fix panels 14 both by means of the second fixing means 78 and by means of the retention means 38 and the corresponding second element 22.

Furthermore, the body 26 may be positioned on the panel 14 every 45 degrees, for example, thus carrying out various functions, such as resting against another element in order to prevent the panel from moving.

Once again, the shape of the body 26 is suitable for holding the panel in position once said shape has been defined. In fact, the known devices allow the panel a certain degree of movement that is necessary for the mounting process but that needs to be avoided once the panel has been mounted in order to prevent the joints between one panel and another from being able to open and an optimum result not being achieved.

When the known devices are used vertically, too, vibrations or the weight itself of the panel causes misalignments of the panel with respect to the optimum position.

In accordance with a possible embodiment, the body 26 is provided with a mounting protrusion 94 located on the outer surface of the connecting portion 32, which may leave a mark on the structure 16 that thus indicates the center of the next hole 72.

Furthermore, the device 12 makes it possible to be able to be fixed using just four screws 56 (two screws for the second element 22 and two screws for the body 26).

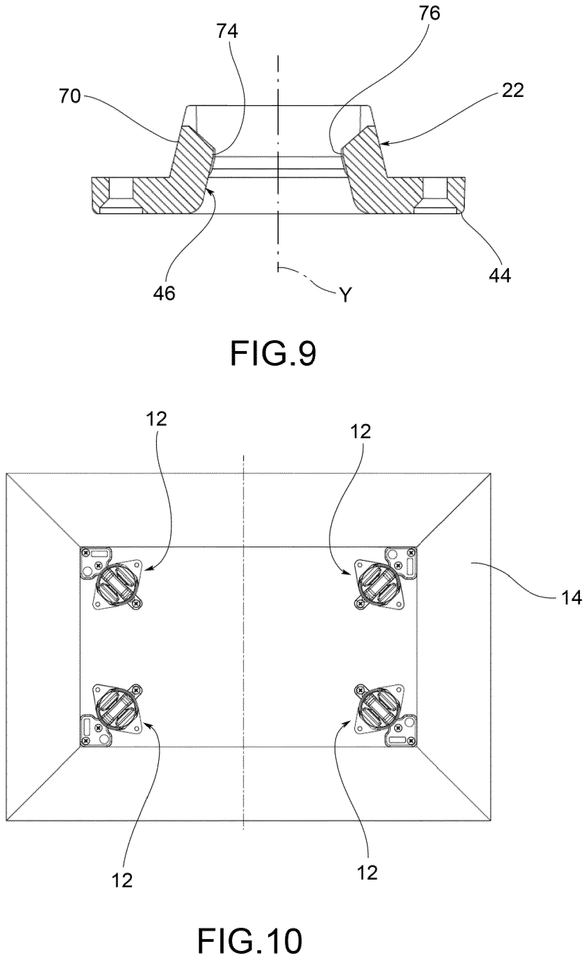

Furthermore, the device makes it possible to mount the panel 14 to the structure 16. On account of the shape of the body 26, it is possible to arrange the devices 12 on precise stops. In this regard, a positioning example may be seen in Fig. 10 that is made simpler by the device 12 according to the present invention. In particular, the panel 14 comprises a frame, at the four inner vertices of which the shaped feet of the body of the first element are positioned. By coming to a stop, the shaped feet may ensure that the devices 12 are accurately positioned.

Once again, in the case in which a pre-mounting process is carried out, both the body 26 and the second element 22 may serve as solid shims without necessarily being coupled. In fact, they may be tested beforehand to verify the actual correct position thereof, without the insertion of the retention means 38, which may be inserted later on, for example after having been painted.

The device 12 is composed of just three elements that do not need to be pre-mounted to one another.

Furthermore, it is also possible to keep the second element 22 mounted to the structure and to replace the retention means 38 with the second fixing means 78.

Furthermore, just one operator is sufficient for removing a cover panel, even a panel having large dimensions.

Once again, once unfastened, the panel does not fall but stays in a position that is at a spacing from the ceiling such that it may be permanently removed from the ceiling by means of a second procedure.

In order to meet specific needs, a skilled person may make modifications to all of the embodiments described above and/or substitute elements described with equivalent elements, without thereby departing from the scope of the attached claims.

## Claims

1. Device (12) for fixing a panel (14) to a structure (16) comprising a first element (18) adapted to be arranged on a surface (20) of the panel (14), and a second element (22) adapted to be arranged on the structure (16) ;
whereby
said first element (18) comprises a body (26) substantially U-shaped with two arms (28, 30) and a connecting portion (32), on each of said arms (28, 30) being arranged a fixing foot (34, 36) for fixing to said panel (14);
said first element (18) also comprising retention means (38) including two locking wings (40, 42), adapted to be arranged astride said body (26), so as to protrude with said locking wings (40, 42) in transversal direction with respect to said body (26);
said second element (22) comprises an insertion portion (70) adapted to be inserted at least partially in a hole (72) arranged on said structure (16), and comprises locking means adapted to block at least the extraction of the second element (22) from the hole (72), said second element (22) also comprising a shaped seat (46) adapted to contain at least partially said connecting portion (32) of said body (26); said shaped seat (46) comprising abutment surfaces (48, 50) for said locking wings (40, 42).

2. Device (12) according to claim 1, **characterized in that** said locking means of said second element (22), comprise a fixing collar (44) provided with two flaps (442, 444) protruding from the insertion portion (70), on each flap (442, 444) being arranged a hole (443, 445) for fixing by means of screws.

3. Device according to any of the preceding claims, **characterized in that** said locking means comprise at least one side prominence (43) arranged on the outer surface of the insertion portion (70).

4. Device (12) according to any one of the preceding claims, **characterized in that** said fixing feet (34, 36) comprise at least one hole (52, 54) adapted to allow the fixing with a screw (56) of said fixing foot (34, 36) to said surface (20) of said panel (14).

5. Device (12) according to any one of the preceding claims, **characterized in that** at least one of said fixing feet (34, 36) is shaped to increase the supporting surface with said panel (14).

6. Device (12) according to any one of the preceding claims, **characterized in that** at least one of said fixing feet (34, 36) is symmetrical in relation to a longitudinal axis (x) of said body (26), said at least one of said fixing feet (34, 36) presenting two lateral surfaces (58, 60) arranged at 90° the one to the other.

7. Device (12) according to any one of the preceding claims, **characterized in that** said body (26), said retention means (38) and said second element (22) are made of metal or polymeric material.

8. Device (12) according to any of the preceding claims, **characterized in that** said locking wings (40, 42) of said retention means (38) comprise an end portion (62, 64) protruding towards the outside of said locking wings (40, 42), said end portion (58, 60) defining a stop (66, 68), adapted to cooperate with said abutment surfaces (48, 50) of said shaped seat (46).

9. Device (12) according to the preceding claim, **characterized in that** said end portions (62, 64) make a slope adapted to facilitate the insertion of said retention means (38) inside said shaped seat (46).

10. Device (12) according to any one of the preceding claims, **characterized in that** said shaped seat (46) is substantially cylindrical, said abutment surfaces (48, 50) being opposite each other with respect to a transversal plane (y), said abutment surfaces (48, 50) defining an internal narrowing (74, 76) for said shaped seat (46).

## Patentansprüche

1. Vorrichtung (12) zum Befestigen eines Paneels (14) an einer Struktur (16), umfassend ein erstes Element (18), welches dazu eingerichtet ist, an einer Fläche (20) des Panels (14) angeordnet zu sein, und ein zweites Element (22), welches dazu eingerichtet ist, an der Struktur (16) angeordnet zu sein; wobei
das erste Element (18) einen im Wesentlichen U-förmigen Körper (26) mit zwei Armen (28, 30) und einen Verbindungsabschnitt (32) umfasst, wobei an jedem der Arme (28, 30) ein Befestigungsfuß (34, 36) zum Befestigen an dem Paneel (14) angeordnet ist;
wobei das erste Element (18) ebenfalls Haltemittel (38) umfasst, welche zwei Verriegelungsflügel (40, 42) umfassen, die dazu eingerichtet sind, rittlings des Körpers (26) angeordnet zu sein, um mit den Verriegelungsflügeln (40, 42) in einer transversalen Richtung in Bezug auf den Körper (26) vorzustehen;
wobei das zweite Element (22) einen Einsatzabschnitt (70) umfasst, welcher dazu eingerichtet ist, wenigstens teilweise in ein Loch (72) eingesetzt zu sein, welches an der Struktur (16) angeordnet ist, und Verriegelungsmittel umfasst, welche dazu eingerichtet sind, wenigstens die Extraktion des zweiten Elements (22) aus dem Loch (72) zu blockieren, wobei das zweite Element (22) ebenfalls einen geformten Sitz (46) umfasst, welcher dazu eingerichtet ist, wenigstens teilweise den Verbindungsabschnitt (32) des Körpers (26) zu enthalten; wobei der geformte Sitz (46) Anlageflächen (48, 50) für die Verriegelungsflügel (40, 42) umfasst.

2. Vorrichtung (12) nach Anspruch 1, **dadurch gekennzeichnet, dass** die Verriegelungsmittel des zweiten Elements (22) einen Befestigungskragen (44) umfassen, welcher mit zwei Laschen (442, 444) bereitgestellt ist, welche von dem Einsatzabschnitt (70) vorstehen, wobei an jeder Lasche (442, 444) ein Loch (443, 445) zum Befestigen mittels Schrauben angeordnet ist.

3. Vorrichtung nach einem der vorhergehenden Ansprüche, **dadurch gekennzeichnet, dass** die Verriegelungsmittel wenigstens eine seitliche Erhebung (43) umfassen, welche an der äußeren Fläche des Einsatzabschnitts (70) angeordnet ist.

4. Vorrichtung (12) nach einem der vorhergehenden Ansprüche, **dadurch gekennzeichnet, dass** die Befestigungsfüße (34, 36) wenigstens ein Loch (52, 54) umfassen, welches dazu eingerichtet ist, das Befestigen mit einer Schraube (56) des Befestigungsfußes (34, 36) an der Fläche (20) des Paneels (14) zu erlauben.

5. Vorrichtung (12) nach einem der vorhergehenden Ansprüche, **dadurch gekennzeichnet, dass** wenigstens einer der Befestigungsfüße (34, 36) derart geformt ist, dass die Stützfläche mit dem Paneel (14) vergrößert ist.

6. Vorrichtung (12) nach einem der vorhergehenden Ansprüche, **dadurch gekennzeichnet, dass** wenigstens einer der Befestigungsfüße (34, 36) in Bezug auf eine longitudinale Achse (x) des Körpers (26) symmetrisch ist, wobei der wenigstens eine der Befestigungsfüße (34, 36) zwei laterale Flächen (58, 60) darbietet, welche die eine zu der anderen im 90° Winkel angeordnet sind.

7. Vorrichtung (12) nach einem der vorhergehenden Ansprüche, **dadurch gekennzeichnet, dass** der Körper (26), die Haltemittel (38) und das zweite Element (22) aus Metall oder einem Polymermaterial hergestellt sind.

8. Vorrichtung (12) nach einem der vorhergehenden Ansprüche, **dadurch gekennzeichnet, dass** die Verriegelungsflügel (40, 42) der Haltemittel (38) einen Endabschnitt (62, 64) umfassen, welcher in Richtung des Äußeren der Verriegelungsflügel (40, 42) vorsteht, wobei der Endabschnitt (58, 60) einen Anschlag (66, 68) definiert, welcher dazu eingerichtet ist, mit den Anlageflächen (48, 50) des geformten Sitzes (46) zusammenzuwirken.

9. Vorrichtung (12) nach dem vorhergehenden Anspruch, **dadurch gekennzeichnet, dass** die Endabschnitte (62, 64) eine Neigung bilden, welche dazu eingerichtet ist, den Einsatz der Haltemittel (38) in den geformten Sitz (46) zu erleichtern.

10. Vorrichtung (12) nach einem der vorhergehenden Ansprüche, **dadurch gekennzeichnet, dass** der geformte Sitz (46) im Wesentlichen zylindrisch ist, wobei die Anlageflächen (48, 50) in Bezug auf eine transversale Ebene (y) zueinander entgegengesetzt sind, wobei die Anlageflächen (48, 50) eine innere Verengung (74, 76) für den geformten Sitz (46) definieren.

## Revendications

1. Dispositif (12) pour fixer un panneau (14) sur une structure (16) comprenant un premier élément (18) adapté pour être agencé sur une surface (20) du panneau (14), et un second élément (22) adapté pour être agencé sur la structure (16) ;
moyennant quoi ledit premier élément (18) comprend un corps (26) sensiblement en forme de U avec deux bras (28, 30) et une portion de raccordement (32), sur chacun desdits bras (28, 30) étant agencé un pied de fixation (34, 36) pour une fixation sur ledit panneau (14) ;
ledit premier élément (18) comprenant également des moyens de retenue (38) comportant deux ailettes de verrouillage (40, 42), adaptés pour être agencés à califourchon sur ledit corps (26), de façon à faire saillie avec lesdites ailettes de verrouillage (40, 42) en direction transversale par rapport audit corps (26) ;
ledit second élément (22) comprend une portion d'insertion (70) adaptée pour être insérée au moins partiellement dans un trou (72) agencé sur ladite structure (16), et comprend des moyens de verrouillage adaptés pour bloquer au moins l'extraction du second élément (22) du trou (72), ledit second élément (22) comprenant également un siège conformé (46) adapté pour contenir au moins partiellement ladite portion de raccordement (32) dudit corps (26) ; ledit siège conformé (46) comprenant des surfaces d'appui (48, 50) pour lesdites ailettes de verrouillage (40, 42).

2. Dispositif (12) selon la revendication 1, **caractérisé en ce que** lesdits moyens de verrouillage dudit second élément (22), comprennent un collier de fixation (44) pourvu de deux abattants (442, 444) faisant saillie de la portion d'insertion (70), sur chaque abattant (442, 444) étant agencé un trou (443, 445) pour une fixation au moyen de vis.

3. Dispositif selon l'une quelconque des revendications précédentes, **caractérisé en ce que** lesdits moyens de verrouillage comprennent au moins une protubérance de côté (43) agencée sur la surface extérieure de la portion d'insertion (70).

4. Dispositif (12) selon l'une quelconque des revendications précédentes, **caractérisé en ce que** lesdits pieds de fixation (34, 36) comprennent au moins un trou (52, 54) adapté pour permettre la fixation avec une vis (56) dudit pied de fixation (34, 36) sur ladite surface (20) dudit panneau (14).

5. Dispositif (12) selon l'une quelconque des revendications précédentes, **caractérisé en ce qu'**au moins l'un desdits pieds de fixation (34, 36) est conformé pour augmenter la surface de support avec ledit panneau (14).

6. Dispositif (12) selon l'une quelconque des revendications précédentes, **caractérisé en ce qu'**au moins l'un desdits pieds de fixation (34, 36) est symétrique par rapport à un axe longitudinal (x) dudit corps (26), ledit au moins un desdits pieds de fixation (34, 36) présentant deux surfaces latérales (58, 60) agencées à 90° l'une de l'autre.

7. Dispositif (12) selon l'une quelconque des revendications précédentes, **caractérisé en ce que** ledit corps (26), lesdits moyens de retenue (38) et ledit second élément (22) sont constitués de métal ou de matériau polymérique.

8. Dispositif (12) selon l'une quelconque des revendications précédentes, **caractérisé en ce que** lesdites ailettes de verrouillage (40, 42) desdits moyens de retenue (38) comprennent une portion d'extrémité (62, 64) faisant saillie vers l'extérieur desdites ailettes de verrouillage (40, 42), ladite portion d'extrémité (58, 60) définissant une butée (66, 68), adaptée pour coopérer avec lesdites surfaces d'appui (48, 50) dudit siège conformé (46).

9. Dispositif (12) selon la revendication précédente, **caractérisé en ce que** lesdites portions d'extrémité (62, 64) font une pente adaptée pour faciliter l'insertion desdits moyens de retenue (38) à l'intérieur dudit siège conformé (46).

10. Dispositif (12) selon l'une quelconque des revendications précédentes, **caractérisé en ce que** ledit siège conformé (46) est sensiblement cylindrique, lesdites surfaces d'appui (48, 50) étant opposées l'une à l'autre par rapport à un plan transversal (y), lesdites surfaces d'appui (48, 50) définissant un rétrécissement interne (74, 76) pour ledit siège conformé (46).
